# EUROPEAN PATENT APPLICATION

(11) **EP 3 098 768 A1**
(43) Date of publication of application: **30.11.2016**
(21) Application number: 14880095.6
(22) Date of filing: 22.01.2014
(51) Int. Cl.: G06Q 30/00

(54) **NETWORK SERVICE SYSTEM FOR ORGANIZING INCENTIVE ACTIVITIES**

(71) Applicant: Kang, Chia-Ming, Yunlin County, Taiwan 632 (TW)
(72) Inventor: Kang, Chia-Ming, Yunlin County, Taiwan 632 (TW)
(74) Representative: Lang, Christian
(86) International application number: PCT/CN2014/071116
(87) International publication number: WO 2015/109458

(57) **Abstract**

A network service system for organizing incentive activities is provided. Each vendor end has an identification data. The identification data of each vendor end is saved in a saving unit, when each vendor end sends the identification data and a service request to a terminal service platform. A processing unit saves the service request and verification information. The verification information includes at least one prize information provided on an object to form verifiable information. When each consumer end sends the verifiable information to the terminal service platform, the processing unit compares the verifiable information with the verification information and saves a verification result, and an execution end executes a feedback means to the consumer end based on the verification result.

## Description

### BACKGROUND OF THE INVENTION

### Field of the Invention

The present invention relates to a network service system, and more particularly to a network service system for organizing incentive activities.

### Description of the Prior Art

As technology advances, people nowadays do various consumptive activities through network platform services. In view of convenience and cost, many vendors start to set up lottery activity platforms on the Internet.

Conventionally, each vendor sets up different lottery activity platforms according to their own requirements. However, the prize redemptions and operation modes on different activity platforms are different, so if a consumer wants to participate in the lottery activity held by different vendors, s/he needs to go to each said activity platform respectively and repeat the verification process on each activity platform. The whole process is time-wasting and confusing and may lower the willingness of the consumer, and the vendors are unable to achieve a preferable marketing effect through the lottery activity.

The present invention has arisen to mitigate and/or obviate the afore-described disadvantages.

### SUMMARY OF THE INVENTION

The major object of the present invention is to provide a network service system for holding organizing incentive activities which allows a plurality of vendor ends to organize incentive activities on a single platform so as to save the manpower, material resources, time and money needed for holding the incentive activity.

To achieve the above and other objects, a network service system for organizing incentive activities is provided, including: a plurality of vendor ends, respective one of the vendor ends having an identification data; a terminal service platform, including a saving unit, a processing unit and an execution end, the saving unit, the processing unit and the execution end being connected to one another, the identification data of respective one of the vendor ends being saved in the saving unit, when respective one of the vendor ends sends the identification data and a service request to the terminal service platform, the processing unit saves the service request and verification information based on the identification data in the saving unit, the service request, the verification information and the identification data corresponding to one another, the verification information including at least one prize information, each said verification information being capable of being provided on an object to form a verifiable information; a plurality of consumer ends, when each said consumer end sends one of the verifiable information to the terminal service platform, the processing unit is capable of comparing the verifiable information with the verification information in the saving unit and saves a verification result corresponded in the saving unit, the execution end executing a feedback means to the consumer end based on the verification result.

A network service system for organizing incentive activities is further provided, including: a plurality of vendor ends, respective one of the vendor ends having an identification data and an funding information corresponding to the identification data; a terminal service platform, including a saving unit, a processing unit and an execution end, the saving unit, the processing unit and the execution end being connected to one another, the identification data, the funding information and a verification information of respective one of the vendor ends being saved in the saving unit, the verification information including prize information, the processing unit being capable of distributing the prize information in the verification information to respective one of the vendor ends based on the funding information of respective one of the vendor ends, each said verification information being capable of being provided on an object to form a verifiable information; a plurality of consumer ends, when each said consumer end sends one of the verifiable information to the terminal service platform, the processing unit is capable of comparing the verifiable information with the verification information in the saving unit and saves a verification result corresponded in the saving unit, and the execution end executes the feedback means to the consumer end based on the verification result.

With the present invention, a consumer does not need to go out to the shop or store where s/he purchase a product to redeem a prize, and respective one of the vendor ends does not need to assign people to the shop or store to assist prize redemption.

Respective one of the vendor ends does not need to search for printing factories for processes like printing and can execute the processes through the execution end, and a manpower cost and an expense of respective one of the vendor ends when holding a lottery activity can be effectively decreased.

The present invention can send specific marketing information according to various preferences and needs of different consumer ends so as to increase an efficiency of the consumer ends making purchases and improve a marketing effect.

The present invention provides a convenient lottery platform, more lottery ways and effective marketing means for respective one of the vendor ends, respective one of the vendor ends can save the manpower, materials, time and money needed for the lottery activity and organize the lottery activity in a more effective and consumer-friendly way.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a drawing showing a preferred embodiment of the present invention; and
Fig. 2 is a diagram showing a structural relation of the preferred embodiment of the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

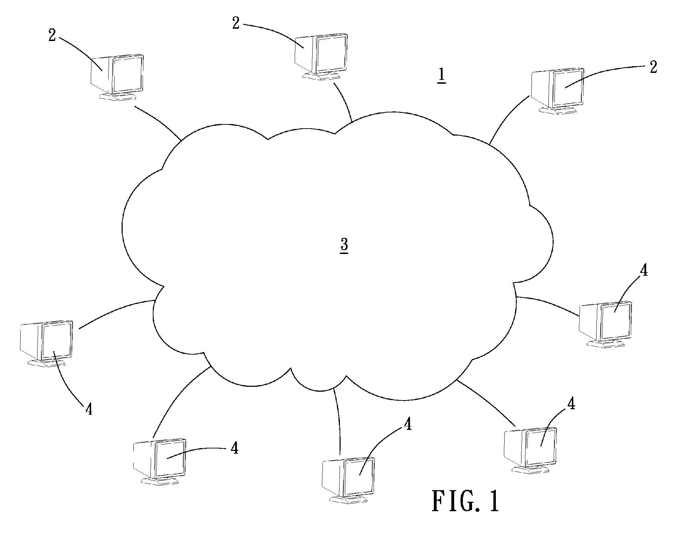

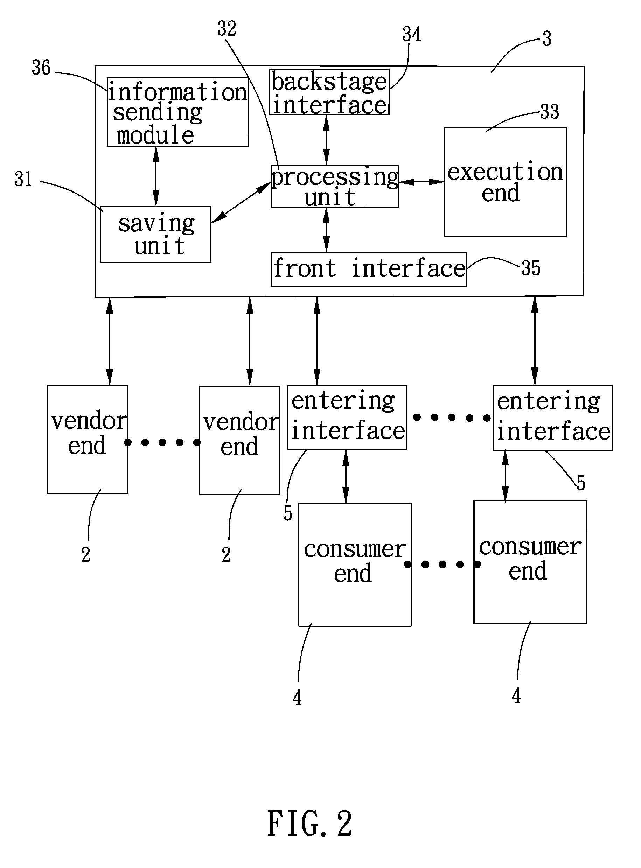

Please refer to Figs. 1 and 2, a network service system 1 for organizing incentive activities is provided, including: a plurality of vendor ends 2, a terminal service platform 3 and a plurality of consumer ends 4.

Respective one of the vendor ends 2 has an identification data, the terminal service platform 3 includes a saving unit 31, a processing unit 32 and an execution end 33, the saving unit 31, the processing unit 32 and the execution end 33 are connected to one another, the identification data of respective one of the vendor ends 2 is saved in the saving unit 31, when respective one of the vendor ends 2 sends the identification data and a service request to the terminal service platform 3, the processing unit 32 saves the service request and verification information based in the saving unit 31 on the identification data, and the service request, the verification information and the identification data correspond to one another. Specifically, the terminal service platform 3 further has a backstage interface 34. In this embodiment, a communication device (for example, a computer, a mobile phone or a tablet) is further provided. Respective one of the vendor ends 2 can view the backstage interface 34 on the communication device through the internet (wired or wireless) and send the identification data and the service request through the backstage interface 34 to the terminal service platform 3. For example, respective one of the vendor ends 2 may send an account or password which are exclusive to the vendor end 2 through the communication device to the terminal service platform 3 so as to log in the backstage interface 34, respective one of the vendor ends 2 may send the service request with different contents according to their requirements to the terminal service platform 3, and the service request may include a name of a lottery activity, information of a number of people participating in the lottery activity, a information of a number of people winning and prize information for the prize provided. In other words, respective one of the vendor ends 2 may directly send the service requests like the name of a lottery activity, the information of a number of people participating in the lottery activity, the information of a number of people winning and the prize information through the backstage interface 34 to the terminal service platform 3, the processing unit 32 of the terminal service platform 3 saves the service request corresponding to the vendor end 2 and the verification information corresponded in the saving unit 31 based on the identification data of respective one of the vendor ends 2.

The verification information includes at least one prize information, preferably, the verification information includes a plurality of drawing information and the prize information, and each said prize information corresponds to one of the prize information. More specifically, the plurality of drawing information may be a free serial number, but not limited thereto, and the drawing information is different from one another. The plurality of drawing information includes information corresponding to the prize information, and in other embodiments, the plurality of drawing information includes the information corresponding to the prize information and non-prize information. Each said verification information can be provided on an object to form verifiable information. Preferably, the verifiable information is covered and optionally exposable, and once the verifiable information is exposed, the verifiable information cannot return to an original state of being covered. For example, the verifiable information is covered by a silver coating layer which can be optionally scraped away, and respective one of the consumer ends 4 can scrape away the silver coating layer to obtain the verifiable information. More specifically, respective one of the consumer ends 4 can purchase a product sold by one of the vendor ends 2 through a sale end, the product is printed with the verifiable information, and the verifiable information is covered by a silver coating layer which can be optionally scraped away; therefore, when respective one of the consumer ends 4 obtains the product which is printed with the verifiable information, respective one of the consumer ends 4 can scrape away the silver coating layer to obtain the verifiable information. Or, when respective one of the consumer ends 4 purchases the product sold by one of the vendor ends 2, the sale end gives the consumer end 4 a label paper which is printed with the verifiable information, the consumer end 4 can scrape away a silver coating layer on the label paper to obtain the verifiable information. When respective one of the consumer ends 4 sends one of the verifiable information to the terminal service platform 3, the processing unit 32 can compare the verifiable information with the verification information in the saving unit 31 and save a verification result corresponded in the saving unit 31. Preferably, in this embodiment, the terminal service platform 3 further has a front interface 35, further including a communication module, the communication module is for showing the front interface 35, the front interface 35 shows the name of the lottery activity of respective one of the vendor ends 2, and respective one of the consumer ends 4 can view the front interface 35 through the communication module and select the name of the lottery activity organized by the said vendor end 2 which sells the product that the consumer end 4 wants to purchase.

It is to be noted that when respective one of the consumer ends 4 chooses the name of the lottery activity of one of the vendor ends 2, respective one of the consumer ends 4 can connect to an entering interface 5, respective one of the consumer ends 4 can send the verifiable information on the entering interface 5; when respective one of the consumer ends 4 sends the verifiable information which the consumer end 4 obtains on the entering interface 5 to the terminal service platform 3, the processing unit 32 can compare the verifiable information with the prize information of the verification information in the saving unit 31, and if the verifiable information matches the prize information, the processing unit 32 records the verification result as "won". Preferably, the entering interface 5 shows a notification to let the consumer end 4 know the prize information correspond, for example, a window showing the prize information related "You won, the prize is a computer", and the consumer end 4 can send a consumer information through the entering interface 5 to the terminal service platform 3, the consumer information indicates the name, phone number, address, email or other similar contact ways of the consumer end 4, the processing unit 32 saves the consumer information in the saving unit 31, the execution end 33 executes a feedback means to the consumer end 4 based on the verification result via the consumer information, and the feedback means may be but not limited to ways such as sending the prize. Specifically, when the verification result of each said consumer information is "won", the execution end 33 sends the prize corresponded to the consumer end 4 to the consumer end 4 based the consumer information sent by the consumer end 4. Therefore, each said consumer does not need to go out to the store or shop which s/he purchases the product to redeem the prize, and respective one of the vendor ends 2 does not need to assign people to the shop or store to assist prize redemption.

Preferably, the verification information which is saved in the saving unit 31 is obtainable by respective one of the vendor ends 2 corresponding thereto through the terminal service platform 3 and each printable on a surface of the object. Specifically, respective one of the vendor ends 2 can download through the backstage interface 34 to obtain the verification information, for example, when respective one of the vendor ends 2 enters the account and password which are exclusive to the vendor end 2 to log in to the backstage interface 34, the vendor end 2 can download the verification information corresponding to the vendor end 2 and print each said verification information through a printing device on each said product or each said label paper. However, in other embodiments, the execution end 33 may print each said verification information on the surface of the object based on the verification information in the saving unit 31, for example, respective one of the vendor ends 2 may grant the terminal service platform 3, the execution end 33 prints each said verification information through the printing device on each said product or each said label paper based on the service request of 1234 end 2. Therefore, respective one of the vendor ends 2 can conduct the printing process through the execution end 33 directly without the need of finding a printing factory, and the manpower cost and spending of respective one of the vendor ends 2 organizing the lottery activity can be saved.

It is to be noted that another embodiment of the present invention may further include an information sending module 36, and the information sending module 36 is connected to the saving unit 31. It is understandable that the information sending module 36 may be a part of the terminal service platform 3 or an independent module which is connected to the saving unit 31. A marketing information is sendable, by the information sending module 36, to the consumer end 4 based on the consumer information in the saving unit 31. Specifically, the marketing information may be an advertising information of a promotion or a discount; therefore, when the consumer end 4 redeems the prize and enters the consumer information to the terminal service platform 3, the saving unit 31 saves the consumer information of the consumer end 4 (for example, the mobile phone number, email or address), the marketing information is sendable, by the information sending module 36, to the consumer end 4 based on the consumer information. For example, when a vendor wants to organize a sale promotion or a discount promotion, the vendor can send an activity SMS through the information sending module 36 to the mobile phone of the consumer end 4 so that the user can be informed of the promotion that the vendor organizes and attracted to go to the shop and make purchases. Or, the vendor end 2 can send an email to an email box of the consumer end 4 or send an advertising flyer to the consumer end 4. Preferably, when the processing unit 32 saves the consumer information in the saving unit 31, the consumer information in the saving unit 31 corresponds to the verification information, that is, a record of the consumer end 4 having purchased the product is saved in the saving unit 31, if the product or similar products are included in the promotion, the marketing information is sendable, by the information sending module 36 , to the consumer end 4 based on the consumer information so that a specific marketing information is sendable by the information sending module 36 according to the preferences or needs of different consumer ends 4 so as to increase the possibility that the consumer end 4 makes purchases and elevate the marketing effect.

In another embodiment, respective one of the vendor ends 2 may also cooperates with the terminal service platform 3 to organize the lottery activity, respective one of the vendor ends 2 provides funds, an funding information is defined based on each funding proportion, the terminal service platform 3 allocates the prize information corresponding to the funding proportion based on the funding information (the funding proportion) of respective one of the vendor ends 2, and the consumer end 4 can participate in the lottery activity of respective one of the vendor ends 2 and a joint lottery activity provided by the terminal service platform 3. Specifically, the terminal service platform 3 can cooperate with respective one of the vendor ends 2 to organize the joint lottery activity in a specific period, each respective one of the vendor ends 2 provides the funds, the terminal service platform 3 provides a prize which has a greater value than a total of the funds of respective one of the vendor ends 2 and is appealing to the consumer end 4, and the terminal service platform 3 allocates the verification information and the prize information corresponding to the funding proportion to be saved in the saving unit 31 based on the funding proportion of respective one of the vendor ends 2 (for example, the vendor end 2 which funds more takes up a greater percentage than the vendor end which funds less). When the consumer end 4 purchases the product at the sale end during the period of the joint lottery activity, the consumer end 4 may receive the verifiable information of the joint lottery activity additionally, the consumer end 4 can participate in the lottery activity on the terminal service platform 3 based on the verifiable information, the consumer end 4 enters the verifiable information into the terminal service platform 3, and the processing unit 32 compares the verifiable information with the prize information of the verifiable information. If the verifiable information matches the verification result of the prize information, the consumer end 4 sends the consumer information to the terminal service platform 3, the processing unit 32 saves the consumer information in the saving unit 31, and the execution end 33 executes the feedback means to the consumer end 4 according to the consumer information based on the verification result. In contrast, the funding proportion and a winning possibility are in a positive correlation; therefore, the consumer end 4 is attracted by and chooses the vendor having the greater winning possibility to seize a greater chance to win, and a sale rate of the vendor end 2 is elevated.

Given the above, the terminal service platform provides a convenient lottery platform, more lottery ways and effective marketing means for respective one of the vendor ends, respective one of the vendor end can save the manpower, materials, time and money needed for the lottery activity and organize the lottery activity in a more effective and consumer-friendly way.

While we have shown and described various embodiments in accordance with the present invention, it should be clear to those skilled in the art that further embodiments may be made without departing from the scope of the present invention.

## Claims

1. A network service system (1) for organizing incentive activities, including:
a plurality of vendor ends (2), respective one of the vendor ends having an identification data;
a terminal service platform (3), including a saving unit (31), a processing unit (32) and an execution end (33), the saving unit (31), the processing unit (32) and the execution end (33) being connected to one another, the identification data of respective one of the vendor ends (2) being saved in the saving unit (31), when respective one of the vendor ends (2) sends the identification data and a service request to the terminal service platform (3),
the processing unit (32) saves the service request and verification information in the saving unit (31) based on the identification data, the service request, the verification information and the identification data corresponding to one another, the verification information including at least one prize information, each said verification information being capable of being provided on an object to form a verifiable information;
a plurality of consumer ends (4), when each said consumer end (4) sends the verifiable information to the terminal service platform (3), the processing unit (32) comparing the verifiable information with the verification information in the saving unit (31) and saves a verification result corresponded in the saving unit (31), the execution end (33) executing a feedback means to the consumer end (4) based on the verification result.

2. The network service system for organizing incentive activities of claim 1, wherein the verification information which is saved in the saving unit (31) is obtainable by respective one of the vendor ends (2) corresponding thereto through the terminal service platform (3) and each printable on a surface of the object.

3. The network service system for organizing incentive activities of claim 1, wherein the execution end (33) prints each said verification information on a surface of the object based on the verification information in the saving unit (31).

4. The network service system for organizing incentive activities of claim 1, wherein when respective one of the consumer ends (4) sends the verifiable information to the terminal service platform (3), the processing unit (32) compares the verifiable information with the prize information of the verification information, if the verifiable information matches the prize information, the consumer end (4) sends a consumer information to the terminal service platform (3), the processing unit (32) saves the consumer information in the saving unit (31), and the execution end (33) executes the feedback means to the consumer end (4) according to the consumer information based on the verification result.

5. The network service system for organizing incentive activities of claim 4, further including a information sending module (36), the information sending module (36) being connected to the saving unit (31), a marketing information being sendable, by the information sending module (36), to the consumer end (4) based on the consumer information in the saving unit (31).

6. A network service system for organizing incentive activities, including:
a plurality of vendor ends (2), respective one of the vendor ends (2) having an identification data and an funding information corresponding to the identification data;
a terminal service platform (3), including a saving unit (31), a processing unit (32) and an execution end (33), the saving unit (31), the processing unit (32) and the execution end (33) being connected to one another, the identification data, the funding information and verification information of respective one of the vendor ends (2) being saved in the saving unit (31),
the verification information including prize information, the processing unit (32) distributing the prize information in the verification information to respective one of the vendor ends (2) based on the funding information of respective one of the vendor ends (2), each said verification information being capable of being provided on an object to form a verifiable information;
a plurality of consumer ends (4), when each said consumer end (4) sends one of the verifiable information to the terminal service platform (3), the processing unit (32) compares the verifiable information with the verification information in the saving unit (31) and saves a verification result corresponded in the saving unit (31), and the execution end (33) executes a feedback means to the consumer end (4) based on the verification result.

7. The network service system for organizing incentive activities of claim 6, wherein respective one of the vendor ends (2) is capable of obtaining the verification information which is saved in the saving unit (31) and corresponds to the vendor end (2) through the terminal service platform (3) and printing each said verification information on a surface of the object.

8. The network service system for organizing incentive activities of claim 6, wherein the execution end (33) prints each said verification information on a surface of the object based on the verification information in the saving unit (31).

9. The network service system for organizing incentive activities of claim 6, wherein when each said consumer end (4) sends the verifiable information to the terminal service platform (3), the processing unit (32) is capable of comparing the verifiable information with the prize information and non-prize information of the verification information, if the verifiable information matches the prize information, the consumer end (4) is capable of sending a consumer information to the terminal service platform (3), the processing unit (32) saves the consumer information in the saving unit (31), and the execution end (33) executes the feedback means to the consumer end (4) according to the consumer information based on the verification result.
